# EUROPEAN PATENT SPECIFICATION

(11) **EP 2 806 156 B1**
(45) Date of publication and mention of the grant of the patent: **24.08.2016**
(21) Application number: 14168222.9
(22) Date of filing: 14.05.2014
(51) Int. Cl.: F01D 5/14, F01D 25/04, F03D 1/06

(54) **Airfoil trailing edge apparatus for noise reduction**
Tragflächenaustrittskantenvorrichtung zur Geräuschverminderung
Appareil de bord de fuite à profil aérodynamique pour la réduction du bruit

(30) Priority: 23.05.2013 US 201313900756
(43) Date of publication of application: 26.11.2014
(73) Proprietor: Siemens Aktiengesellschaft, 80333 München (DE)
(72) Inventor: Asheim, Michael, Golden, 80401 (US); Dixon, Kristian R., Boulder, 80304 (US); Eisenberg, Drew, Boulder, 80304 (US); Hansen, Henrik Fredslund, 9000 Aalborg (DK); Mullings, Justin L., Golden, 80403 (US); Rimmington, Peter J., Superior, 80027 (US); Singh, Manjinder J., Broomfield, 80020 (US); Steingrimsson, Arni T., Erie, 80516 (US); Zamora Rodriguez, Alonso O., Boulder, 80304 (US)

(56) References cited:
- EP-A1- 2 568 166
- WO-A1-2008/003330
- WO-A2-2011/157849
- US-A1- 2008 187 442
- US-A1- 2011 211 954
- US-A1- 2013 071 253

## Description

### FIELD OF THE INVENTION

The invention relates to noise reduction devices on airfoils, and particularly to devices for noise reduction on wind turbine blades having thick trailing edges.

### BACKGROUND OF THE INVENTION

Airfoils with thick (or blunt) trailing edges may be used on wind turbine blades to improve aerodynamic and structural performance. However, thick trailing edges are subjected to larger aerodynamic pressure gradients across the trailing edge than are thin trailing edges. This leads to the generation of von-Karman vortex streets downstream of the airfoil, resulting in undesirable acoustic noise.

One approach to reduce this acoustic noise is adding a pre-manufactured trailing edge part to the trailing edge of the rotor blade body. Several designs of such a pre-manufactured trailing edge part are disclosed in the international patent application WO 2011/157849 A2.

Due to the size and fragility of modern wind turbine rotor blades, the US patent application US 2008/0187442 A1 also proposes to add a trailing edge part to the rotor blade body in order to facilitate transport of the wind turbine rotor blade. Additionally to the facilitation of transportation of the wind turbine rotor blades, the added trailing edge part may be useful for noise reduction purposes.

### BRIEF DESCRIPTION OF THE DRAWINGS

The invention is explained in the following description in view of the drawings that show:
FIG. 1 is a trailing portion of a prior art airfoil with a thick trailing edge shown generating von Karman vortex shedding in a slipstream.
FIG. 2 is a partial sectional view of an airfoil trailing edge with a noise reduction ridge attachment according to an embodiment of the invention.
FIG 3 shows an embodiment with a hollow center and side perforations.
FIG 4 shows an embodiment as in FIG 3 with a core of sound-absorbing material, progressive perforations, and with a serrated peak.
FIG 5 shows an embodiment with a serrated ridge defining parallel smaller ridges.
FIG 6 shows an embodiment with bristles or brushes attached to a ridge.
FIG 7 shows an embodiment with bristles or brushes of varying length defining a ridge.
FIG 8 shows an embodiment with serrations in a suction side corner of a ridge attachment.
FIG 9 shows an embodiment with serrations crossing a suction side corner of an airfoil trailing edge and a suction side corner of a ridge attachment.
FIG 10 shows an embodiment with serrations in a suction side corner of an airfoil trailing edge.

### DETAILED DESCRIPTION OF THE INVENTION

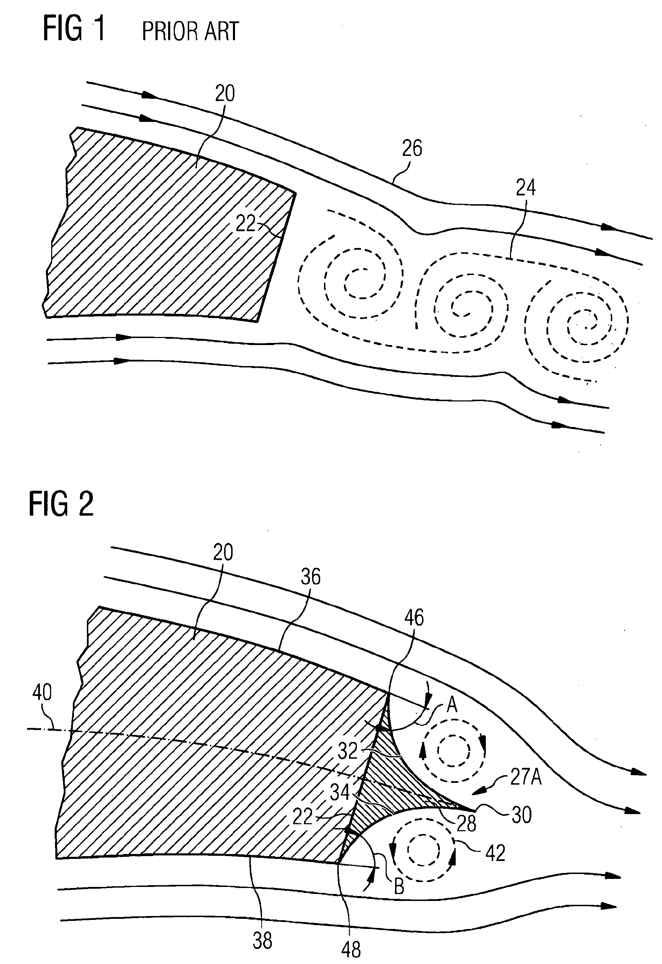

FIG 1 shows an aft portion of a prior art airfoil 20 with a thick trailing edge 22 producing von Karman vortex shedding or a "vortex street" 24 in a fluid flow 26. Such slipstream oscillations increase drag and noise under some conditions. Herein, "thick trailing edge" means a trailing edge that is blunt or squared, rather than sharp, such that it generates a von Karman vortex street under possible operating conditions absent the apparatus herein.

FIG 2 shows an aft portion of an airfoil 20 with a thick trailing edge 22, on which is mounted or defined a noise reduction device 27A in the form of a ridge 28 along the trailing edge, with a peak 30 of the ridge extending aft. The peak 30 may extend for example in a direction of extension of a mean camber line 40 or a chord line of the airfoil. In some embodiments, this ridge forms two stationary vortices 42 instead of a vortex street (24 FIG 1), thus eliminating the noise and drag of the vortex street.

Each side 32, 34 of the ridge 28 may span between a respective corner 46, 48 of a squared trailing edge 22 and the peak 30 of the ridge 28. Herein "corner" in this context means a corner as seen in a cross sectional view. Each side 32, 34 may form an inward angle A, B of at least 20 degrees relative to an extension of the respective suction and pressure sides 36, 38 of the airfoil, or especially more than 30 degrees. The sides may be concave as shown. Such a ridge reduces the size of the stationary vortices 42 compared to that which would be produced by a flat splitter plate by providing a compact, smoothly contoured nest for each stationary vortex 42. This results in a smoother and more compact slipstream that produces less drag and noise. This noise reduction device 27A may be made of a material compatible with the airfoil material, such as carbon fiber/polymer composite or fiberglass/polymer composite, but are not limited to such materials. Alternately, the device 27A may be made of a more flexible material than the airfoil such as nylon, polyester or rubber that may deform to alleviate loads.

If the trailing edge is blunt without sharp corners 46, 48, the ridge 28 may be defined as comprising two walls 32, 34 converging to a peak 30 from a respective suction side and pressure side of the trailing edge 22, for example at inward angles A, B of at least 20 or 30 degrees.

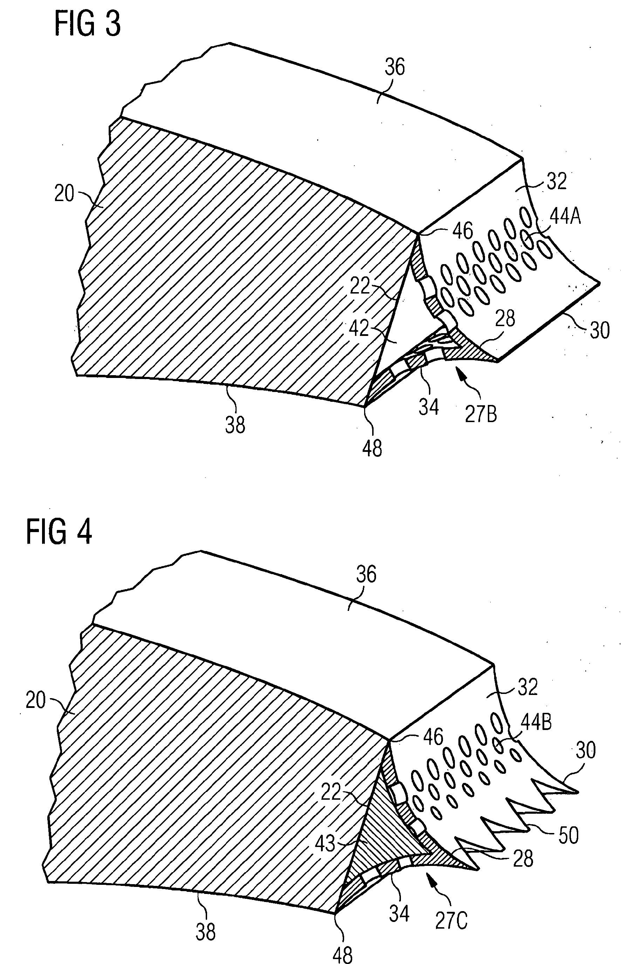

FIG 3 shows an embodiment of the noise reduction device 27B with a hollow interior 42 and perforations 44A in both sides 32, 34. Alternatively, the perforations may be formed on only one of the sides 32, 34. When the perforations are provided on both sides 32, 34, they provide metered pressure equalization across the ridge 28. A solid ridge embodiment as in FIG 2 may also include holes passing through the ridge from side 32 to side 34 for this purpose.

FIG 4 shows an embodiment of the noise reduction device 27C similar to 27B with further enhancements. The perforations 44B may have at least two different diameters, providing progressively metered pressure equalization between the sides of the ridge. The peak 30 of the ridge may be serrated 50. The serrations modify the coherence of the pressure wave structure emanating from the trailing edge, which attenuates the wave by the atmosphere, thus reducing noise. The hollow interior (42 FIG 4) may be filled with a core of sound absorbing material 43, such as a breathable felt or open-cell foam that allows damped pressure equalization via the perforations 44B or other known sound absorbing material. Optionally, the perforations 44B may extend partly or completely through the acoustic filler 43.

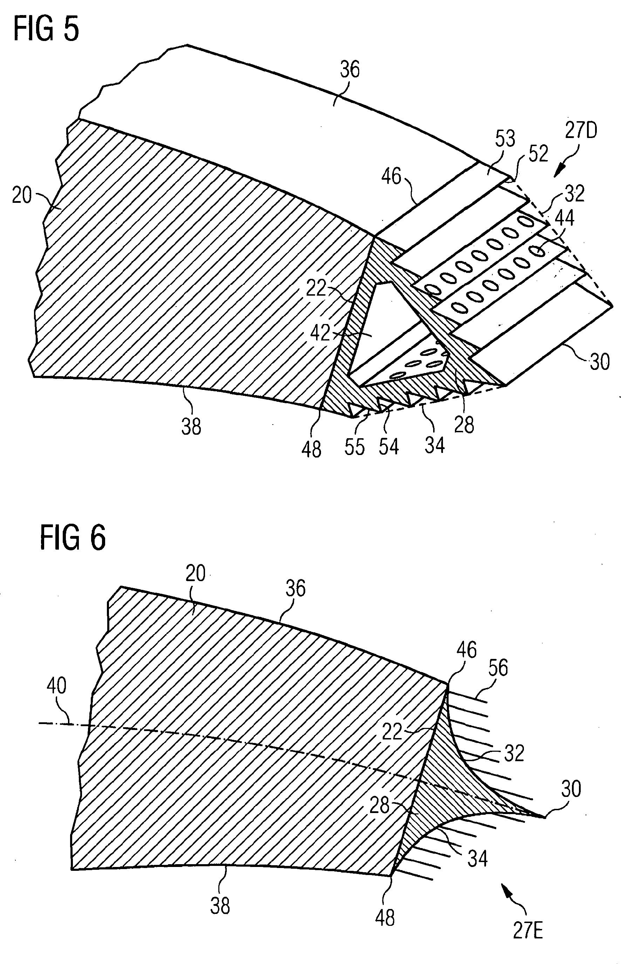

FIG 5 shows an embodiment of the device 27D in which each side 32, 34 of the ridge 28 is serrated to form a series of secondary ridges or spoilers 52, 54 that may be triangular in cross section. The trailing edge of each of the spoilers may be parallel to the peak 30 of the ridge, and may have an outer surface 53, 55 aligned with a nearer one of the pressure and suction sides 36, 38 of the airfoil or aligned with the mean camber line or chord line of the airfoil 20. The ridge 28 may be solid, hollow, or filled with a sound absorbing material and/or may have perforations 44 through one or both sides. The spoilers 52, 54 promote the formation of smaller flow structures that create high frequency acoustic noise that is easily attenuated by the atmosphere, and they also change the direction of noise emissions, thus diffusing the noise source.

FIG 6 shows an embodiment of the device 27E with bristles 56 on both sides of the ridge 28. The bristles may be oriented with a mean camber liner 40 or a chord line or with the nearest pressure or suction side 36, 38 of the airfoil. The bristles act as sound and vortex shedding dampers. The bristles also promote the formation of small flow structures and diffuse noise signals by increasing the possible directions in which the noise can propagate.

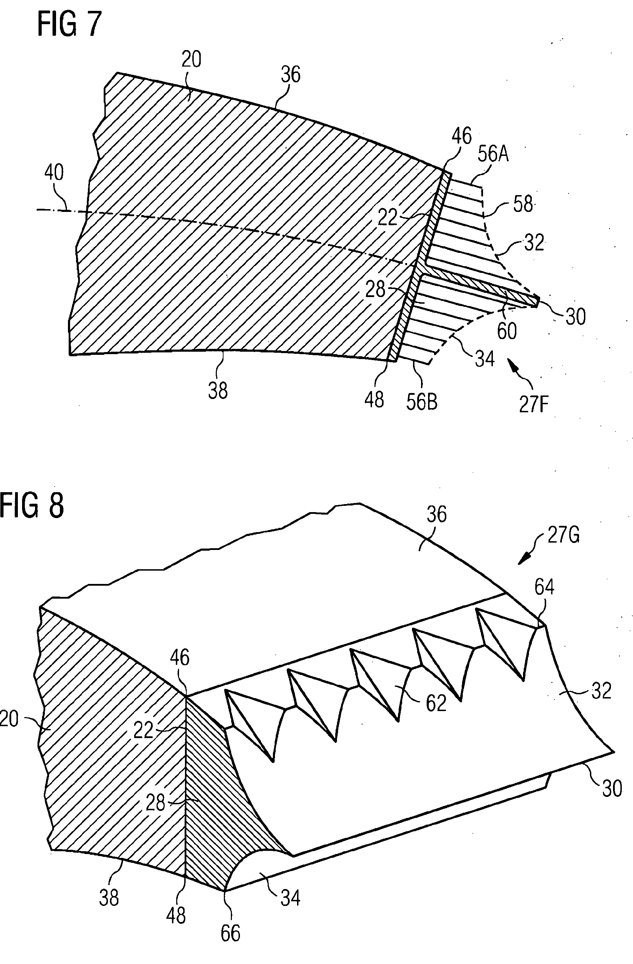

FIG 7 shows an embodiment of the device 27F with two pluralities of bristles 56A, 56B of varying lengths, with tips 58 arranged to define sides 32, 34 of the ridge 28. A splitter plate 60 may be provided between the first and second pluralities of bristles, in which case the distal end of the splitter plate defines the peak 30 of the ridge 28. The splitter plate may be flexible and/or perforated.

FIG 8 shows an embodiment of the device 27G with serrations 62 in a corner 64 of the suction side 32 and/or a corner 66 of the pressure side 34 of the ridge 28. The serrations promote formation of eddies with higher frequencies than in unmodified vortex shedding. The higher frequencies attenuate faster in the atmosphere.

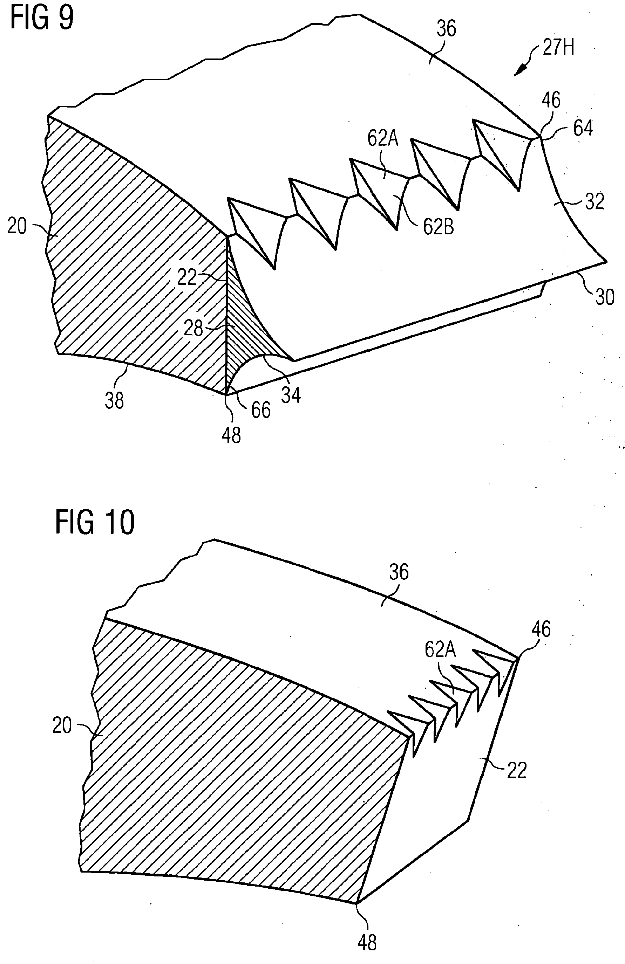

FIG 9 shows an embodiment of the device 27G with serrations 62A, 62B that cut across one or both corners 46, 48 of the trailing edge and cut across respective adjacent attached corners 64, 66 of the ridge 28. Such serrations may be ground into the suction side corner 46 and/or the pressure side corner 46 of the trailing edge after attachment of the ridge 28 onto the trailing edge. The serrations promote formation of eddies with higher frequencies than in unmodified vortex shedding.

The ridge 28 of the invention may be fabricated separately from the airfoil 20, and attached to it by adhesive or fasteners such as screws. With separate fabrication the ridge can use materials different from the airfoil that are specialized for sound reduction, such as flexible materials and sound absorbing core materials. The invention allows for site-specific trailing edge attachments. For example, high turbulence sites can use soft-passive trailing edge attachments. Alternatively, the ridge 28 can be cast along with the blade as long as it can withstand the temperatures experienced during casting.

Another benefit is that wind turbine blades with thick trailing edges can be transported without damage to the trailing edge because the ridge can be attached to the blade on site. Alternately, in some embodiments the ridge may be formed integrally with the airfoil, for example by grinding the trailing edge into a ridge geometry as described and shown herein. If the ridge is formed integral, the trailing edge as discussed herein is defined as an imaginary plane extending between the suction side and the pressure side between the corners 46, 48.

FIG 10 shows a thick trailing edge 22 with a corner 46 modified with serrations 62A, providing benefits similar to the serrations described for FIGs 8 and 9. Such serrations may be formed on one or both of the pressure and suction sides, and they may be of uniform size and shape over the entire airfoil, or they may be of varying sizes and/or shapes on one or both sides, and they may be cooperatively formed and positioned between the two sides to provide a desired noise reduction effect.

Benefits of thick trailing edges on wind turbine blades may include:
- For some manufacturing methods, thicker trailing edges may result in better resistance to buckling than thin trailing edges. This may become increasingly relevant for swept blades.
- A thick trailing edge allows blade designers to tailor the blade torsional stiffness. Reducing torsional stiffness allows a more twistable blade without sacrificing the flap stiffness needed to control tip deflections and avoid tower strikes.
- A thick trailing edge allows greater freedom to add or remove edgewise stiffness to prevent dynamic structural/aerodynamic instabilities such as unstable whirling modes. Thickness is an alternative to large amounts of pre-deflection flap, which presents transportation and manufacturing issues.
- Thin trailing edges are prone to.damage by tight straps or other objects during transportation. Damaged trailing edges are likely to be repaired in a way that creates additional aerodynamic noise due to grinding roughness or inaccurate shape.
- Benign extreme loads. Thick trailing edge sections exhibit lower flap loads under extreme conditions.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

In an advantageous embodiment, the ridge of the airfoil trailing edge apparatus is hollow.

In another advantageous embodiment, spoilers on the first and second sides of the ridge each comprise an outer surface aligned with a nearer one of a pressure side or suction side of the airfoil or aligned with a mean camber line or a chord line of the airfoil.

In yet another advantageous embodiment, the ridge is separately formed and is attached to the airfoil at the trailing edge.

In yet another advantageous embodiment, the ridge is formed integral to the airfoil.

The invention is also directed towards an airfoil trailing edge shaped for noise reduction, comprising a suction side corner and a pressure side corner of the trailing edge; and a plurality of serrations along at least one of the corners of the trailing edge.

## Claims

1. An airfoil trailing edge apparatus for noise reduction, comprising:
a ridge (28) along a trailing edge of an airfoil;
wherein the ridge comprises first (32) and second (34) sides converging from a respective suction (36) side and pressure (38) side of the trailing edge to an aft-pointing peak of the ridge,
**characterized in that**
the sides of the ridge are concave, and
the ridge (28) is perforated with a plurality of holes (44B) of at least two different diameters.

2. The airfoil trailing edge apparatus of claim 1 wherein the first side of the ridge spans between the peak and a suction side corner of the trailing edge, and the second side of the ridge spans between the peak and a pressure side corner of the trailing edge.

3. The airfoil trailing edge apparatus of claim 1 wherein the peak of the ridge is serrated.

4. The airfoil trailing edge apparatus of claim 1 wherein the ridge comprises a core of a sound absorbing material.

5. The airfoil trailing edge apparatus of claim 1 wherein the ridge comprises a core of a breathable sound absorbing material, and both sides of the ridge are perforated with holes that provide pressure equalization between the two sides of the ridge through the breathable core.

6. The airfoil trailing edge apparatus of claim 1 wherein at least one of the sides of the ridge comprises a spoiler in the form of a secondary ridge.

7. The airfoil trailing edge apparatus of claim 1, further comprising a plurality of bristles attached to at least one side of the ridge.

8. The airfoil trailing edge apparatus of claim 1, further comprising first and second pluralities of bristles of varying length that provide bristle tips arranged to define respectively the first and second sides of the ridge.

9. The airfoil trailing edge apparatus of claim 8, further comprising a splitter plate between the first and second pluralities of bristles, wherein the splitter plate is aligned with a mean camber line or a chord line of the airfoil, and a distal end of the splitter plate defines the peak of the ridge.

10. The airfoil trailing edge apparatus of claim 1, wherein the trailing edge further comprises a suction side corner, a pressure side corner, and a plurality of serrations along at least one of the corners of the trailing edge, the serrations crossing a respective attached corner of the ridge.

11. The airfoil trailing edge apparatus of claim 1, wherein the ridge comprises a suction side corner and a pressure side corner, and a plurality of serrations along at least one of the corners of the ridge.

12. The airfoil trailing edge apparatus of claim 1,
wherein the first and second sides of the ridge converge from a respective suction side and pressure side of the trailing edge at respective inward angles of at least 20 degrees relative to respective extensions of the pressure side or suction side of the airfoil.

## Patentansprüche

1. Profilhinterkantenvorrichtung zur Lärmreduzierung, die Folgendes umfasst:
eine an einer Hinterkante eines Profils entlang verlaufende Rippe (28),
wobei die Rippe eine erste (32) und eine zweite (34) Seite umfasst, die von einer Saugseite (36) beziehungsweise einer Druckseite (38) der Hinterkante aus zu einer nach hinten zeigenden Spitze der Rippe hin konvergieren,
**dadurch gekennzeichnet, dass**
die Seiten der Spitze konkav sind und
die Spitze (28) mit mehreren Löchern (44B) von mindestens zwei verschiedenen Durchmessern perforiert ist.

2. Profilhinterkantenvorrichtung nach Anspruch 1, bei der die erste Seite der Rippe zwischen der Spitze und einer Saugseitenecke der Hinterkante und die zweite Seite der Rippe zwischen der Spitze und einer Druckseitenecke der Hinterkante verläuft.

3. Profilhinterkantenvorrichtung nach Anspruch 1, bei der die Spitze der Rippe gezahnt ist.

4. Profilhinterkantenvorrichtung nach Anspruch 1, bei der die Rippe einen Kern aus einem schallabsorbierenden Material umfasst.

5. Profilhinterkantenvorrichtung nach Anspruch 1, bei der die Rippe einen Kern aus einem atmungsaktiven, schallabsorbierenden Material umfasst und beide Seiten der Rippe mit Löchern perforiert sind, die durch den atmungsaktiven Kern für einen Druckausgleich zwischen den beiden Seiten der Rippe sorgen.

6. Profilhinterkantenvorrichtung nach Anspruch 1, bei der mindestens eine der Seiten der Rippe einen Spoiler in Form einer zusätzlichen Rippe umfasst.

7. Profilhinterkantenvorrichtung nach Anspruch 1, die ferner mehrere Borsten umfasst, welche auf mindestens einer Seite der Rippe angebracht sind.

8. Profilhinterkantenvorrichtung nach Anspruch 1, die ferner mehrere erste und mehrere zweite Borsten verschiedener Länge umfasst, deren Borstenspitzen so angeordnet sind, dass sie die erste beziehungsweise die zweite Seite der Rippe definieren.

9. Profilhinterkantenvorrichtung nach Anspruch 8, die ferner eine Trennplatte zwischen den mehreren ersten und den mehreren zweiten Borsten umfasst, wobei die Trennplatte mit einer Skelettlinie oder einer Profilsehne des Profils auf einer Linie liegt und ein distales Ende der Trennplatte die Spitze der Rippe definiert.

10. Profilhinterkantenvorrichtung nach Anspruch 1, bei der die Hinterkante ferner eine Saugseitenecke, eine Druckseitenecke und an mindestens einer der Ecken der Hinterkante entlang mehrere Verzahnungen umfasst, die eine entsprechende angebrachte Ecke der Rippe durchziehen.

11. Profilhinterkantenvorrichtung nach Anspruch 1, bei der die Rippe eine Saugseitenecke und eine Druckseitenecke und an mindestens einer der Ecken der Rippe entlang mehrere Verzahnungen umfasst.

12. Profilhinterkantenvorrichtung nach Anspruch 1, bei der die erste und die zweite Seite der Rippe von einer Saugseite beziehungsweise einer Druckseite der Hinterkante aus in einem Winkel von jeweils mindestens 20 Grad in Bezug zu einer Verlängerung der Druckseite beziehungsweise der Saugseite des Profils nach innen konvergieren.

## Revendications

1. Appareil de bord de fuite d'un élément de voilure pour la réduction du bruit, comprenant :
une arête (28) le long d'un bord de fuite d'un élément de voilure ;
dans lequel l'arête comprend des premier (32) et deuxième (34) côtés convergeant respectivement à partir d'un côté aspiration (36) et d'un côté pression (38) du bord de fuite jusqu'à un sommet de pointe arrière de l'arête,
**caractérisé en ce que**
les côtés de l'arête sont concaves, et
l'arête (28) est perforée par une pluralité de trous (44B) d'au moins deux diamètres différents.

2. Appareil de bord de fuite d'un élément de voilure selon la revendication 1, dans lequel le premier côté de l'arête s'étend entre le sommet et un angle de côté aspiration du bord de fuite, et le deuxième côté de l'arête s'étend entre le sommet et un angle de côté pression du bord de fuite.

3. Appareil de bord de fuite d'un élément de voilure selon la revendication 1, dans lequel le sommet de l'arête est dentelé.

4. Appareil de bord de fuite d'un élément de voilure selon la revendication 1, dans lequel l'arête comprend un noyau en une matière absorbant le son.

5. Appareil de bord de fuite d'un élément de voilure selon la revendication 1, dans lequel l'arête comprend un noyau en une matière absorbant le son perméable à l'air, et les deux côtés de l'arête sont perforés par des trous qui procurent une égalisation des pressions entre les deux côtés de l'arête à travers le noyau perméable à l'air.

6. Appareil de bord de fuite d'un élément de voilure selon la revendication 1, dans lequel au moins un des côtés de l'arête comprend un déflecteur sous la forme d'une arête secondaire.

7. Appareil de bord de fuite d'un élément de voilure selon la revendication 1, comprenant en outre une pluralité de soies attachées à au moins un côté de l'arête.

8. Appareil de bord de fuite d'un élément de voilure selon la revendication 1, comprenant en outre des première et deuxième pluralités de soies de différentes longueurs qui fournissent des pointes de soie agencées pour définir respectivement les premier et deuxième côtés de l'arête.

9. Appareil de bord de fuite d'un élément de voilure selon la revendication 8, comprenant en outre une plaque séparatrice entre les première et deuxième pluralités de soies, dans lequel la plaque séparatrice est alignée avec une ligne de courbure moyenne ou une ligne de corde de l'élément de voilure, et une extrémité distale de la plaque séparatrice définit le sommet de l'arête.

10. Appareil de bord de fuite d'un élément de voilure selon la revendication 1, dans lequel le bord de fuite comprend en outre un angle de côté aspiration, un angle de côté pression, et une pluralité de dentelures le long d'au moins un des angles du bord de fuite, les dentelures croisant un angle attenant respectif de l'arête.

11. Appareil de bord de fuite d'un élément de voilure selon la revendication 1, dans lequel l'arête comprend un angle de côté aspiration et un angle de côté pression, et une pluralité de dentelures le long d'au moins un des angles de l'arête.

12. Appareil de bord de fuite d'un élément de voilure selon la revendication 1, dans lequel les premier et deuxième côtés de l'arête convergent respectivement à partir d'un côté aspiration et d'un côté pression du bord de fuite, sous des angles intérieurs respectifs d'au moins 20 degrés par rapport aux prolongements respectifs du côté pression ou du côté aspiration de l'élément de voilure.
